Europäisches Patentamt

European Patent Office

Office européen des brevets

(19)

(11) Numéro de publication : **0 161 711**
**B1**

(12) **FASCICULE DE BREVET EUROPÉEN**

(45) Date de publication du fascicule du brevet :
**17.08.88**

(21) Numéro de dépôt : **85200674.1**

(22) Date de dépôt : **01.05.85**

(51) Int. Cl.⁴ : **E 06 B 7/10, E 06 B 7/02,**
**F 24 J 2/04, F 24 J 2/34**

(54) Elément de menuiserie extérieure à circulation d'air.

(30) Priorité : **11.05.84 FR 8407460**

(43) Date de publication de la demande :
**21.11.85 Bulletin 85/47**

(45) Mention de la délivrance du brevet :
**17.08.88 Bulletin 88/33**

(84) Etats contractants désignés :
**AT BE CH DE FR GB IT LI LU NL SE**

(56) Documents cités :
**WO-A-82 /031 00**
**DE-A- 3 004 364**
**FR-A- 1 542 070**
**GB-A- 2 115 135**
**US-A- 4 162 671**
**PATENTS ABSTRACTS OF JAPAN, vol. 7, no. 145 (M-224)[1290], 24 juin 1983**

(73) Titulaire : **SOLVAY & Cie (Société Anonyme)**
**Rue du Prince Albert, 33**
**B-1050 Bruxelles (BE)**

(72) Inventeur : **Sirlereaux, Serge**
**Lecenerstrasse, 25**
**D-8026 Ebenhausen (DE)**
Inventeur : **Wilikens, Robert**
**Nouvelle Chaussée de Gand, 9**
**B-1720 Groot-Bijgaarden (BE)**

Jouve, 18, rue St-Denis, 75001 Paris, France

**Description**

La présente invention concerne un élément de menuiserie extérieure à circulation d'air comprenant un châssis de fenêtre équipé d'au moins deux vitrages et une pièce d'appui pour le châssis.

L'isolation thermique des bâtiments a fait l'objet de progrès techniques considérables ces dernières années. Toutefois, malgré les progrès apportés à leur conception et à leur réalisation, les éléments de la construction comprenant des surfaces vitrées restent, par nature, ceux qui contribuent le plus aux déperditions calorifiques constatées dans les bâtiments.

Bien sûr, la généralisation des châssis équipés de vitrages doubles et même triples a permis de remédier dans une large mesure aux déperditions calorifiques dont les éléments de la construction présentant des surfaces vitrées sont la source.

Les surfaces vitrées restent néanmoins, par nature plus froides que l'ensemble des matériaux de nature isolante utilisés dans le bâtiment constituant ainsi toujours le maillon le plus faible de l'isolation de ce dernier et procurant, pendant la mauvaise saison, une sensation d'inconfort aux personnes situées à leur proximité.

Une tentative de pallier à ces inconvénients a consisté à réaliser des éléments de menuiserie complexes constitués de châssis doubles. Ces réalisations deviennent toutefois coûteuses, sans qu'un gain décisif soit enregistré en ce qui concerne la température de la surface du vitrage intérieur.

On a également proposé des éléments de fenêtres isolants dont on assure la ventilation par de l'air extérieur préalablement chauffé par passage dans une pompe à chaleur air-air disposée dans l'appui de la fenêtre (demande de brevet DE-A-3 037 646 de DEUTSCHMEISTER BAUELE-MENTE). Cette réalisation, également coûteuse, implique en outre une importante consommation d'énergie pour faire fonctionner la pompe à chaleur et le ventilateur qui lui est associé.

On a également décrit (document « Patents Abstracts of Japan », volume 7, n° 145 du 24 juin 1983) un mur accumulant la chaleur comprenant un élément collecteur de chaleur et un élément accumulateur de chaleur reliés par des tubes inclinés véhiculant un milieu caloporteur par lequel la chaleur est transférée de l'élément collecteur vers l'élément accumulateur.

Si l'élément accumulateur est surmonté d'un double vitrage, l'espace compris entre les deux vitres est chauffé, ralentissant les déperditions calorifiques à travers le double vitrage. Ce dispositif ne comprend aucun moyen propre à assurer la circulation d'un fluide chauffé dans l'espace compris entre les deux vitres. De par sa conception, il n'est pas à l'abri de surchauffes dommageables pouvant être engendrées dans cet espace.

Un but de la présente invention est de fournir des éléments de menuiserie extérieure qui ne présentent pas les inconvénients sus-mentionnés.

L'invention concerne à cet effet un élément de menuiserie extérieure à circulation d'air comprenant un châssis de fenêtre équipé d'au moins deux vitrages (10) (11) et une pièce d'appui (3) pour le châssis dans laquelle est disposé un accumulateur de chaleur (5) qui est équipé de moyens (a) le mettant en communication avec l'air extérieur et de moyens (a') (b) le mettant en communication avec l'espace (9) compris entre les deux vitrages (10) (11), de manière à permettre le passage de l'air extérieur à travers l'accumulateur de chaleur (5) puis à travers l'espace (9) par un mouvement de convection naturelle, le châssis étant équipé de moyens (e) d'évacuation de l'air ayant traversé l'espace (9).

La réalisation de l'élément de menuiserie extérieure faisant l'objet de la présente invention est basée sur un principe fondamentalement différent de celui sur lequel est basé le dispositif du document « Patents Abstracts of Japan » cité.

En effet, dans la réalisation selon l'invention, une circulation d'air s'établit à travers l'élément de menuiserie par convection naturelle de l'air extérieur préchauffé par son passage dans l'accumulateur de chaleur, ce dernier étant mis en communication à la fois avec l'espace compris entre les deux vitrages équipant le châssis de fenêtre et avec l'air extérieur.

L'élément de menuiserie selon l'invention est généralement réalisé en un matériau isolant choisi parmi les matières thermoplastiques. De préférence, il est réalisé à partir d'une matière thermoplastique contenant une proportion prépondérante de chlorure de polyvinyle (PVC).

Cet élément de menuiserie comprend un châssis de fenêtre réalisé en un des matériaux susmentionnés et, de préférence, à partir de profilés extrudés en PVC rigide non plastifié assemblés entre eux. Ce châssis peut être du type fixe ou ouvrant. Dans le cas préféré d'un châssis ouvrant, il peut s'agir d'un châssis du type dit « ouvrant à la français » à un ou deux battants, du type coulissant ou basculant horizontal, du type tombant intérieur haut, ou encore du type oscillo-battant.

Quel que soit le type de châssis que l'élément de menuiserie selon l'invention comprend, il est équipé d'au moins deux vitrages. Il peut s'agir d'un vitrage double ou triple ; il peut aussi s'agir de la combinaison d'un vitrage simple ou isolant double positionné dans la feuillure du châssis et d'un survitrage, lui-même simple ou multiple, posé sur le châssis par n'importe quel moyen conventionnel, par exemple dans la feuillure d'un châssis auxiliaire. Dans tous les cas, au moins un espace compris entre au moins deux vitrages successifs du châssis doit pouvoir être mis en communication avec l'air extérieur.

L'élément de menuiserie selon l'invention comprend encore une pièce d'appui pour le châssis ouvrant ou fixe. Par pièce d'appui, on entend désigner indifféremment la partie inférieure du cadre dormant (cas du châssis ouvrant), la traverse inférieure du cadre fixe (cas du châssis fixe) et, en particulier, l'allège de la fenêtre.

Selon l'invention, la pièce d'appui pour le châssis comprend un accumulateur de chaleur. Par accumulateur de chaleur, on entend désigner n'importe quel dispositif statique collecteur d'énergie calorifique. De préférence, cette énergie est obtenue par conversion thermique d'énergie lumineuse telle que l'énergie du rayonnement solaire.

Selon l'invention, l'accumulateur de chaleur disposé dans la pièce d'appui pour le châssis est mis en communication par tout moyen convenable, tel que des orifices, canaux, perforations, etc. d'une part, avec l'air extérieur et, d'autre part, avec l'espace compris entre les deux vitrages dont le châssis est au moins équipé, comme mentionné plus haut. De cette manière, une circulation d'air s'établit, dans l'élément de menuiserie extérieure selon l'invention, par un mouvement de convection naturelle de l'air extérieur préchauffé par son passage dans l'accumulateur de chaleur.

On crée ainsi d'une manière simple, avec un dispositif entièrement statique, une isolation dynamique du châssis de la fenêtre.

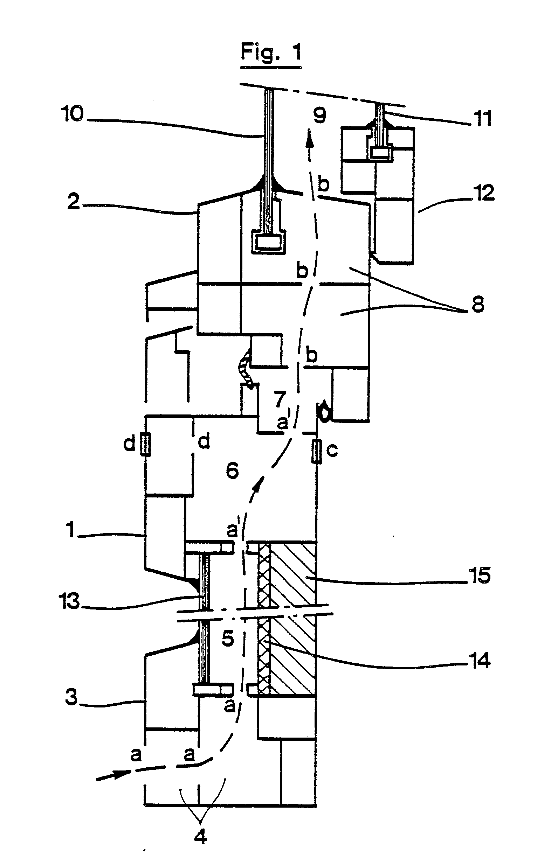

Un mode de réalisation de principe d'un élément de menuiserie extérieure à circulation d'air selon l'invention est décrit ci-après en faisant référence à la figure 1 des dessins annexés.

La figure 1 représente schématiquement une coupe verticale effectuée dans la partie inférieure d'un élément de menuiserie à châssis du type ouvrant, comprenant un cadre dormant 1 et un cadre ouvrant 2 constitués de profilés de PVC structurés de manière à ménager des cloisons délimitant des chambres intérieures.

Le cadre dormant 1 et l'allège 3 sont percés par des canalisations et perforations (a) (a') et le cadre ouvrant 2 par des canalisations et perforations (b) permettant le passage de l'air extérieur successivement au travers des chambres inférieures 4 de la traverse inférieure du cadre dormant 1, d'un accumulateur de chaleur 5, de la chambre supérieure d'évacuation 6 de la traverse inférieure du cadre dormant 1, puis, via la chambre périphérique étanche 7 assurant la liaison entre les cadres ouvrant et dormant, au travers des chambres intérieures 8 de la traverse inférieure obstruée aux extrémités du cadre ouvrant 2 pour déboucher dans l'espace 9 compris entre le vitrage extérieur 10 et le survitrage intérieur 11 monté dans un châssis auxiliaire 12 dont on a représenté le profilé constituant la traverse inférieure.

Des moyens non représentés sur la figure 1, tels que des orifices d'évacuation aménagés dans la traverse supérieure du cadre ouvrant assurent l'évacuation de l'air ayant traversé l'espace 9 compris entre les vitrages 10 et 11.

L'accumulateur de chaleur 5 comprend une couverture transparente 13, un élément collecteur 14 et un isolant 15. La couverture transparente 13 est généralement constituée d'une matière plastique transparente ou translucide, telle que du polyméthacrylate de méthyle, par exemple, ou d'un vitrage qui peut être simple ou multiple. L'élément collecteur 14 peut être par exemple un élément comprenant une surface métallique (aluminium) recouverte d'une peinture absorbante sélective ou non, de préférence noire. Il peut aussi être constitué d'un matériau de stockage thermique à chaleur sensible, tel que des agglomérés de ciment par exemple. De préférence, l'élément collecteur 14 est constitué d'un matériau de stockage thermique à chaleur latente, tel qu'un sel chimique accumulant la chaleur au cours de sa fusion et la restituant au cours de sa solidification.

Optionnellement, l'élément de menuiserie extérieure selon l'invention comprend, disposés dans la pièce d'appui pour le châssis, des moyens statiques pour évacuer directement l'air ayant traversé l'accumulateur de chaleur à l'extérieur et/ou à l'intérieur du bâtiment dans lequel ledit élément de menuiserie est monté. Dans ce mode d'exécution, ces moyens peuvent coopérer avec ceux mettant l'accumulateur en communication avec l'espace compris entre les vitrages du châssis de manière à ne permettre le passage de l'air issu de l'accumulateur que dans deux ou de préférence dans une seule des trois directions déterminées par lesdits moyens.

L'évacuation directe de l'air ayant traversé l'accumulateur de chaleur permet notamment, parmi d'autres avantages, d'éviter toute surchauffe des profilés du châssis qui risquerait de les endommager et d'éviter d'introduire de l'air trop frais à l'intérieur du bâtiment lorsque, à la suite de conditions atmosphériques déterminées par exemple, aucune énergie calorifique n'est cédée à l'air passé au travers de l'accumulateur de chaleur.

Dans le cas particulier d'un châssis à cadre ouvrant, ces moyens statiques d'évacuation de l'air sont, de préférence, des orifices ménagés dans les faces avant et arrière des chambres supérieures du profilé constituant la traverse inférieure du cadre dormant. Ces orifices sont schématiquement représentés en c et d dans la figure 1. Des dispositifs conventionnels, non représentés sur cette figure, tels que des grilles, volets, clapets, etc. peuvent obturer séparément les orifices a', et c de la chambre 6 et l'orifice d de manière à ne permettre le passage de l'air que dans une seule direction à la fois.

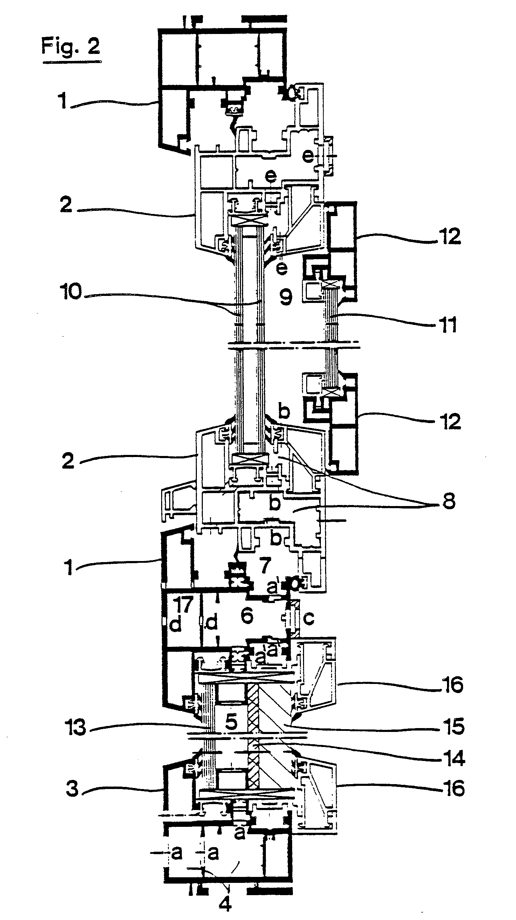

Un exemple pratique de réalisation d'un élément de menuiserie extérieure à circulation d'air selon l'invention est illustré en détails à la figure 2 des dessins annexés qui représente une coupe verticale complète dans un élément de menuiserie selon l'invention.

Les repères de la figure 2 correspondant à ceux de la figure 1 se rapportent aux mêmes détails de réalisation.

Dans cet exemple pratique de réalisation de l'élément de menuiserie illustré par la figure 2, la couverture transparente 13 de l'accumulateur de chaleur 5 est un vitrage simple.

L'élément collecteur 14 est un panneau tuyauté constitué de tubes remplis d'un matériau de stockage thermique à chaleur latente qui est par exemple du chlorure de calcium hexahydraté (tel que celui résultant de l'hydratation appropriée du produit vendu sous la marque de fabrique CASOTHERM par SOLVAY & Cie). Pareil matériau de stockage thermique est particulièrement recommandable parce que son changement de phase (point de fusion) se réalise à basse température (29 °C), que sa chaleur totale de fusion est très élevée et que sa stabilité dans le temps est excellente. Le bas point de fusion de ce matériau, en particulier, élimine pratiquement tout risque d'endommagement des profilés de l'élément de menuiserie par surchauffe.

Dans l'exemple pratique illustré par la figure 2, l'accumulateur de chaleur 5 est maintenu en place par des profilés amovibles 16, permettant ainsi son remplacement aisé.

Dans l'exemple pratique illustré par la figure 2, le vitrage 10 est un vitrage isolant double et l'air chaud provenant de l'accumulateur 5 passe, via les orifices b, à travers l'espace compris entre ce vitrage double 10 et le survitrage 11 monté dans le châssis auxiliaire ouvrant 12. Il quitte ensuite cet espace via les orifices d'évacuation e aménagés dans la traverse supérieure du cadre ouvrant 2, l'orifice e de la face interne de cette traverse étant optionnellement équipé d'une grille d'obturation.

Dans l'exemple pratique illustré par la figure 2, enfin, les orifices supérieur a et latéral c de la chambre d'évacuation 6 et l'orifice d extérieur de la chambre de drainage 17 sont obturables séparément par un dispositif non représenté assurant simultanément l'ouverture d'un seul de ces orifices et la fermeture des deux autres.

**Revendications**

1. Elément de menuiserie extérieure à circulation d'air comprenant un châssis de fenêtre équipé d'au moins deux vitrages (10) (11) et une pièce d'appui (3) pour le châssis, dans laquelle est disposé un accumulateur de chaleur (5), caractérisé en ce que l'accumulateur de chaleur (5) est équipé de moyens (a) le mettant en communication avec l'air extérieur et de moyens (a') (b) le mettant en communication avec l'espace (9) compris entre les deux vitrages (10) (11) de manière à permettre le passage de l'air extérieur à travers l'accumulateur de chaleur (5) puis à travers l'espace (9) par un mouvement de convection naturelle, et en ce que le châssis est équipé de moyens (e) d'évacuation de l'air ayant traversé l'espace (9).

2. Elément de menuiserie selon la revendication 1 caractérisé en ce que le châssis de fenêtre est réalisé à partir de profilés extrudés (1) (2) en chlorure de polyvinyle rigide assemblés entre eux.

3. Elément de menuiserie selon la revendication 1 ou 2 caractérisé en ce que le châssis est du type ouvrant.

4. Elément de menuiserie selon l'une quelconque des revendications 1 à 3, caractérisé en ce que la pièce d'appui (3) est l'allège de la fenêtre.

5. Elément de menuiserie selon l'une quelconque des revendications 1 à 4, caractérisé en ce que l'accumulateur de chaleur (5) comprend une couverture transparente (13), un élément collecteur (14) et un isolant (15).

6. Elément de menuiserie selon la revendication 5, caractérisé en ce que l'élément collecteur (14) est un panneau tuyauté constitué de tubes remplis d'un matériau de stockage thermique à chaleur latente.

7. Elément de menuiserie selon l'une quelconque des revendications 1 à 6, caractérisé en ce qu'il comprend, disposés dans la pièce d'appui (3) pour le châssis, des moyens statiques (c) (d) pour évacuer directement l'air ayant traversé l'accumulateur de chaleur (5) à l'extérieur et/ou à l'intérieur du bâtiment dans lequel ledit élément de menuiserie est monté.

8. Elément de menuiserie selon la revendication 7 caractérisé en ce que les moyens statiques (c) (d) pour évacuer directement l'air coopèrent avec les moyens (a') mettant l'accumulateur de chaleur (5) en communication avec l'espace (9) compris entre les vitrages (10) (11) du châssis de manière à ne permettre le passage de l'air issu de l'accumulateur que dans une seule des trois directions déterminées par lesdits moyens.

**Claims**

1. External joinery unit with air circulation comprising a window frame equipped with at least two panes (10) (11) and a ledge (3) for the frame, in which a heat accumulator (5) is arranged, characterized in that the heat accumulator (5) is equipped with means (a) placing it in communication with the outside air and with means (a') (b) placing it in communication with the space (9) included between the two panes (10) (11) in order to allow the passage of the outside air through the heat accumulator (5), then through the space (9), by means of a natural convection movement, and in that the frame is equipped with means (e) for discharging the air which has passed through the space (9).

2. Joinery unit according to Claim 1, characterized in that the window frame is produced from extruded profiles (1) (2), made of rigid polyvinyl chloride, assembled together.

3. Joinery unit according to Claim 1 or 2, characterized in that the frame is of the opening type.

4. Joinery unit according to any one of Claims 1 to 3, characterized in that the ledge (3) is the window breast.

5. Joinery unit according to any one of Claims 1 to 4, characterized in that the heat accumulator (5) comprises a transparent cover (13), a collector unit (14) and an insulator (15).

6. Joinery unit according to Claim 5, characterized in that the collector unit (14) is a panel of tubes made up of tubes filled with a latent heat thermal storage material.

7. Joinery unit according to any one of Claims 1 to 6, characterized in that it comprises, arranged in the ledge (3) for the frame, static means (c) (d) for directly discharging the air which has passed through the heat accumulator (5) to the outside and/or to the inside of the building in which the said joinery unit is installed.

8. Joinery unit according to Claim 7, characterized in that the static means (c) (d) for directly discharging the air interact with the means (a') placing the heat accumulator (5) in communication with the space (9) included between the panes (10) (11) of the frame in order to allow the passage of air emerging from the accumulator in only one of the three directions defined by the said means.

**Patentansprüche**

1. Gebäudefassadenelement mit Luftströmung umfassend einem Fensterrahmen, der mit wenigstens zwei Verglasungen (10) (11) ausgestattet ist, und ein Auflageteil (3), in dem ein Wärmespeicher (5) vorgesehen ist, für den Rahmen, dadurch gekennzeichnet, daß der Wärmespeicher (5) mit Einrichtungen (a), die ihn mit der Außenluft verbinden, und Einrichtungen (a') (b), die ihn mit dem zwischen den zwei Verglasungen (10) (11) eingeschlossenen Raum (9) verbinden, so ausgestattet ist, daß der Durchfluß der Außenluft über den Wärmespeicher (5) und dann über den Raum (9) durch eine natürliche Konvektionsbewegung ermöglicht wird, und dadurch, daß der Rahmen mit Einrichtungen (e) zum Abzug der Luft, die den Raum (9) durchströmt hat, ausgestattet ist.

2. Gebäudefassadenelement nach Anspruch 1, dadurch gekennzeichnet, daß der Fensterrahmen aus extrudierten Profilen (1) (2) aus Hart-Polyvinylchlorid hergestellt ist, die miteinander zusammengesetzt sind.

3. Gebäudefassadenelement nach Anspruch 1 oder 2, dadurch gekennzeichnet, daß der Rahmen öffnenden Typs ist.

4. Gebäudefassadenelement nach einem der Ansprüche 1 bis 3, dadurch gekennzeichnet, daß der Auflageteil (3) die Fensterbrüstung ist.

5. Gebäudefassadenelement nach einem der Ansprüche 1 bis 4, dadurch gekennzeichnet, daß der Wärmespeicher (5) einen transparenten Überzug (13), ein Kollektorelement (14) und einen Isolator (15) umfaßt.

6. Gebäudefassadenelement nach Anspruch 5, dadurch gekennzeichnet, daß das Kollektorelement (14) eine mit Rohren durchzogene Platte ist gebildet aus Rohren, die mit einem wärmespeichernden Material mit latenter Wärme gefüllt sind.

7. Gebäudefassadenelement nach einem der Ansprüche 1 bis 6, dadurch gekennzeichnet, daß es statische Einrichtungen (c) (d), die in dem Auflageteil (3) für den Rahmen angeordnet sind, umfaßt, um die Luft, die den Wärmespeicher (5) durchströmt hat, unmittelbar nach außen und-/oder in das Bauwerk, in welchem dies Gebäudefassadenelement montiert ist, abzuziehen.

8. Gebäudefassadenelement nach Anspruch 7, dadurch gekennzeichnet, daß die statischen Einrichtungen (c) (d) zum unmittelbaren Abzug der Luft mit den Einrichtungen (a'), die den Wärmespeicher (5) mit dem zwischen den Verglasungen (10) (11) des Rahmens eingeschlossenen Raum (9) verbinden, so zusammenwirken, daß der von dem Speicher abgeleitete Luftdurchfluß nur in einer einzigen der drei durch diese Einrichtungen festgelegten Richtungen zugelassen wird.

## Fig. 1

Fig. 2